# Europäisches Patentamt
## European Patent Office
## Office européen des brevets

⑩

(11) Veröffentlichungsnummer: **0 098 588**
**B1**

(12) **EUROPÄISCHE PATENTSCHRIFT**

(45) Veröffentlichungstag der Patentschrift:
**06.04.88**

(21) Anmeldenummer: **83106562.8**

(22) Anmeldetag: **05.07.83**

(51) Int. Cl.⁴: **H 04 L 25/03, H 04 L 25/49**

(54) Adaptiver Entzerrer zur Entzerrung mehrstufiger Signale.

(30) Priorität: **08.07.82 DE 3225621**

(43) Veröffentlichungstag der Anmeldung:
**18.01.84 Patentblatt 84/3**

(45) Bekanntmachung des Hinweises auf die Patenterteilung:
**06.04.88 Patentblatt 88/14**

(84) Benannte Vertragsstaaten:
**AT DE IT NL**

(73) Patentinhaber: **Siemens Aktiengesellschaft Berlin und München, Wittelsbacherplatz 2, D-8000 München 2 (DE)**

(72) Erfinder: **Bruckböck, Peter, Dipl.- Ing., Jahnstrasse 5, D-8068 Pfaffenhofen (DE)**
Erfinder: **Ringelhaan, Otmar, Dipl.- Ing., Mauthäuslstrasse 39, D-8000 München 70 (DE)**

(56) Entgegenhaltungen:
EP-A-0 023 056
US-A-3 633 014

PATENTS ABSTRACTS OF JAPAN, Band 3, Nr. 153, 15. Dezember 1979, Seite 119 E 159; & JP - A - 54 133 866 (NIPPON DENKI K.K.) 17.10.1979
PATENTS ABSTRACTS OF JAPAN, Band 5, Nr. 179 (E-82) 851 , 17. November 1981; & JP - A - 56 107 614 (NIPPON DENKI K.K.) 26.08.1981
PATENTS ABSTRACTS OF JAPAN, Band 6, Nr. 200 (E-135) 1078 , 9. Oktober 1982; & JP - A - 57 109 434 (NIPPON DENKI K.K.) 07.07.1982 (Kat. A)

EP 0 098 588 B1

## Beschreibung

Die Erfindung betrifft einen adaptiven Entzerrer zur Entzerrung mehrstufiger Signale unter Verwendung von Korrelatoren und von über Regelgrößen einstellbarer Einstellglieder, bei dem die Korrelatoren zwischen zwei Regelkriterien über Schalter umschaltbar sind.

Ein Entzerrer der vorgenannten Art ist aus der JP-A-54 133 bekannt.

Der Mechanismus einer adaptiven Entzerrung beruht bekanntlich auf der Korrelation von Störung (Istsignal minus Sollsignal) einerseits und von die Störung verursachenden (Nutz-) Signalen andererseits. Aus dieser Korrelation ergeben sich Regelspannungen, welche Stellglieder im Signalweg im Sinne einer Verringerung der Störung beeinflussen. Da auf der Empfangsseite Sollwerte lediglich Schätzwerte darstellen, sind beide Größen, nämlich sowohl die Störung, als auch die verursachenden Signale, auch nur Schätzwerte.

Um zu erreichen, daß ein adaptiver Entzerrer sicher konvergiert, muß zu Beginn des Adaptionsvorgangs ein Minimum an Störabstand vorhanden sein. Bei zu großer Störung, also auch bei zu großer linearer Verzerrung, entsprechen die Schätzwerte von Soll- und Störsignal nur zu selten den tatsächlichen Werten, was dazu führt, daß keine brauchbaren Regelspannungen entstehen und der Entzerrer nicht konvergiert. Da die Toleranz gegenüber einer Störung von der Anzahl der übertragenen Amplitudenstufen abhängt, ist bei Mehrstufenübertragung diese Situation früher erreicht als bei binärer Übertragung.

Es steht also das Problem an, den Adaptionsvorgang bei adaptiven Entzerrern für mehrstufige Signale zu erleichtern, und zwar mit dem Ziel, auch unter extrem ungünstigen Übertragungsverhältnissen, d.h. bei stark verzerrtem Signal, ein Konvergieren des Entzerrers zu ermöglichen.

Bei weiteren bekannten Entzerrern dieser Art (z. B. "BSTJ", 44 (1965), H. 4, Seite 547 ff) wurden bisher binäre Lernmuster übertragen, was jedoch sowohl auf der Sendeseite als auch auf der Empfangsseite entsprechende Maßnahmen zur Folge hat und damit auch den technischen Schaltungsaufwand verhältnismäßig in die Höhe treibt.

Der Erfindung liegt die Aufgabe zugrunde, möglichst einfache Schaltungen für derartige Entzerrer anzugeben, insbesondere solche Schaltungen, bei denen kein Rückkanal erforderlich ist.

Diese Aufgabe wird für die einleitend genannten adaptiven Entzerrer erfindungsgemäß in der Weise gelöst, daß der Schalter eine Schaltung enthält, die nach Art eines Quadrierers aus einem Exklusiv-ODER-Gatter besteht, dessen Eingänge über ein Laufzeitglied zusammengeschaltet sind.

Eine vorteilhafte Ausgestaltung ist im Unteranspruch angegeben.

Anhand von Ausführungsbeispielen wird nachstehend die Erfindung noch näher erläutert.

Es zeigen in der Zeichnung

Fig. 1 einen umschaltbaren Korrelator, bei dem auch die Verwendung analoger Bestandteile möglich ist,

Fig. 2 eine als Quadrierer wirkende Schaltung,

Fig. 3 eine weitere Korrelatorschaltung, die aus digitalen Schaltungsbausteinen aufgebaut werden kann und die gegebenenfalls auch nach Art eines ROM ausgebildet sein kann. Bei der Erfindung wird unter anderem noch von folgenden Überlegungen ausgegangen.

Ein Entzerrer für mehrstufige Signale wird dann leichter konvergieren, wenn für die Zeit der Adaption auf binär Übertragung umgeschaltet wird. Bei Übertragungssystemen ohne Rückkanal wäre diese Umschaltung allerdings nur auf der Empfangsseite durchführbar; die Wirksamkeit dieser Maßnahme ist jedoch nicht offensichtlich.

Im folgenden wird eine Akquisitonsschaltung für Entzerrer mehrstufiger Signale beschrieben, die bewirkt, daß der Empfänger bei stark gestörtem Signal auf quasibinären Betrieb übergeht und damit den Adaptionsvorgang erleichtert.

Für die Regelspannungserzeugung bei adaptiven Entzerrern für N-stufige Signale gilt folgendes.

Bei üblichen Entzerrern - auch bei solchen für mehrstufige Signale - werden die bei den zu korrelierenden Größen meist binär verarbeitet, d.h. ein gegebenes Stellglied wird angesteuert von $\Sigma$ sign $(a_i - b_i) \cdot$ sign $c_i$. Dabei seien die Werte $a_i$ das Istsignal, $b_i$ das Sollsignal und $c_i$ ein bestimmter Verursacher.

Die bloße Decodierung eines N-stufigen Signals (mit (N-1) Entscheiderschwellen) liefert bereits die Werte $b_i$ sowie sign $c_i$. Zur Darstellung der Werte sign $(a_i - b_i)$ sind 2N-1 Entscheiderschwellen erforderlich. Wird im Dual-Code decodiert, so liefert das LSB (least significant bit = niedrigstwertiges Bit) bereits die Werte sign $(a_i - b_i)$, ein entsprechend zeitversesztes MSB (most significant bit = höchstwertiges Bit) die Werte sign $c_i$.

Eine fehlerhafte Decodierung trifft bei einem zweistufigen Signal beide Faktoren gleichermaßen. Bei einem mehrstufigen Signal sind von einer fehlerhaften Decodierung in erster Linie die Sollwerte $(b_i)$ betroffen, was sich auf den Faktor sign $(a_i - b_i)$ auswirkt. Bei zu großer Störung und Mehrstufenübertragung werden also hauptsächlich deshalb - trotz einigermaßen richtiger Werte für $c_i$ - keine brauchbaren Regelspannungen entstehen.

Eine zweistufige Auswertung mehrstufiger Signale ergibt folgendes.

Eine größere Ausbeute an richtigen Schätzwerten wird zweifellos anfallen, wenn statt einer Schätzung von $b_i$ zunächst lediglich eine Schätzung von sign $b_i$ durchgeführt wird. Zu diesen sign $b_i$ gehören jetzt fiktive binäre Sollwerte $b_i$, deren Amplitude dem mittleren Amplitudenstufenwert des gesendeten Signals entspricht. Auf diesen Mittelwert bezogen sind nun die Istwerte $a_i$ mit zweierlei Störungen behaftet, nämlich einmal mit jener (linearen) Störung, die durch den adaptiven Entzerrer erkannt und beseitigt werden soll, und zum anderen mit einer gleichbleibenden unkorrelierten Störung aufgrund der tatsächlichen Mehrstufigkeit des Signals. Die Situation ist offenbar prinzipiell dieselbe wie bei gestörtem, rein binärem Betrieb. Anders als dort nimmt hier die unkorrelierte Störung aber nur diskrete Werte an, was unter Umständen dazu führt, daß unterhalb einer bestimmten Schwelle die lineare Störung bei der Bildung von sign $(a_i - b_i)$ nicht mehr hervortritt und deshalb dann wieder auf normalen Betrieb übergegangen werden muß - der dann auch wieder brauchbare mehrstufige Schätzwerte $b_i$ liefert.

Bei mehrstufigen Signalen mit $N = 2^n$ gleich häufigen Amplitudenstufen wird deren Mittelwert durch die Entscheiderschwellen des zweitwertigsten Bits dargestellt. Bei zweistufiger Auswertung ist dies damit gleichzeitig das LSB und liefert somit - Dual-Decodierung vorausgesetzt - bereits die Werte sign $(a_i - b_i)$.

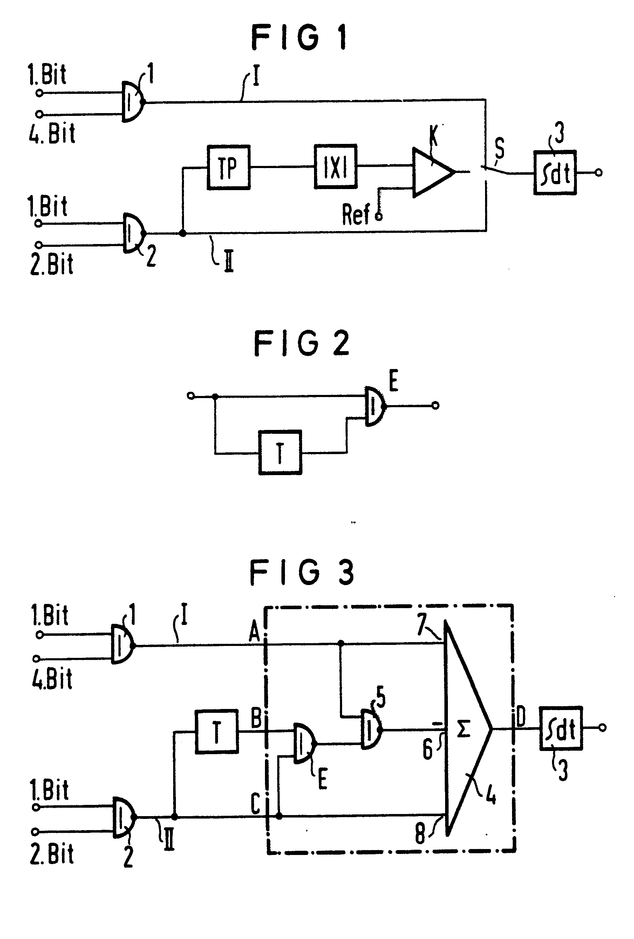

Umschaltkriterium und mögliche Ausführungsformen werden in den Fig. 1 bis 3 noch im einzelnen erläutert.

Im Beispiel der Fig. 1 ist zu erkennen ein Exklusiv-ODER-Gatter 1, dem ausgangsseitig eine Leitung nachgeschaltet ist, auf der ein Regelkriterium I in Form der Häufigkeitsverteilung der binären Zahlen "0" und "1" geführt wird. Das gleiche gilt für eine Leitung, die am Ausgang eines Exklusiv-ODER-Gatters 2 liegt und das Regelkriterium II führt. An den beiden Eingängen des Exklusiv-ODER-Gatters 1 liegen an Signale, die durch "1. Bit" und "4. Bit" gekennzeichnet sind, ebenso liegen an den Eingängen des Exklusiv-ODER-Gatters 2 Signale an, die durch "1. Bit" und "2. Bit" kenntlich gemacht sind. Dem Exklusiv-ODER-Gatter 2 ist noch nachgeschaltet ein Tiefpaß TP, dem ein Absolutwertbildner IXI folgt, und von dem aus wird ein Komparator K erreicht, dessen Ausgangssignal auf einen Schalter S einwirkt. Der zweite Eingang des Komparators K liegt auf einem Bezugspotential, das mit Ref bezeichnet ist. Die Regelkriterien I und II können über den nachfolgenden Schalter umgeschaltet werden und gelangen von dort aus aus auf eine Integrationsschaltung 3, an deren Ausgang dann gewissermaßen das Korrelatorausgangssignal auftritt.

In Fig. 2 ist rein schaltungsmäßig zu erkennen ein invertierendes Exklusiv-ODER-Gatter E, an dessen einen Eingang ein an sich beliebiges Signal unmittelbar herangeführt wird, während sein zweiter Eingang das gleiche signal über ein Verzögerungsglied T mit einer Verzögerungszeit von mindestens einer Periode des Verarbeitungstaktes erhält.

Im Ausführungsbeispiel von Fig. 3 sind für funktionsgleiche Teile die gleichen Bezugsziffern verwendet wie in Fig. 1, so daß insoweit unmittelbar auf Fig. 1 verwiesen werden kann. Der Schalter S enthält jedoch gewissermaßen einen Summierverstärker 4 mit einem invertierenden Eingang 6 und zwei nichtinvertierenden Eingängen 7 und 8. Am Eingang 7 liegt unmittelbar das vom Exklusiv-ODER-Gatter kommende Regelkriterium I an, während am weiteren nichtinvertierenden Eingang 8 das vom Exklusiv-ODER-Gatter 2 kommende Regelkriterium II anliegt. Dem invertierenden Eingang 6 ist ein Gatter 5 vorgeschaltet, das im Ausführungsbeispiel ebenfalls als invertierendes Exklusiv-ODER-Gatter ausgebildet ist, und dessen einer Eingang unmittelbar mit dem Eingang 7 des Summierverstärkers 4 zusammengeschaltet ist. Dem zweiten Eingang des Gatters 5 ist eine nach Art von Fig. 2 ausgebildete Quadierschaltung vorgeschaltet, also ein invertierendes Exklusiv-ODER-Gatter E, dessen einer Eingang unmittelbar mit dem Eingang 8 zusammengeschaltet ist, während sein zweiter Eingang über das Laufzeitglied T am Eingang 8 liegt. Der dort gestrichelt eingerahmte Teil ist mit den Anschlußklemmen A, B, C und D bezeichnet und kann gegebenenfalls als ROM ausgebildet werden, für das die später noch angegebene Tabelle gilt.

Im einzelnen ist bezüglich der Fig. 7 bis 3 noch folgendes zu bemerken.

Als Beispiel dient ein Entzerrer für ein Signal mit acht äquidistanten und gleich häufigen Amplitudenstufen. Er enthält einen Entscheider mit einer Auflösung von vier Bit, wobei durch die ersten drei Bit das Signal decodiert wird.

Bei einem Entzerrer nach Fig. 1 entsteht eine bestimmte Regelspannung durch die Korrelation von 4, und (dazu zeitversetztem) 1. Bit. Ein Korrelator, der gemäß der hier behandelten Erkenntnisse arbeitet, muß zwischen den zwei Verknüpfungen (1. Bit) · (4. Bit) und (1. Bit) · (2. Bit) umschaltbar sein, wie dies in Fig. 1 zu erkennen ist. Das Kriterium für die Umschaltung kann aus der Verknüpfung von 1. und 2. Bit gewonnen werden. Bei Vorhandensein einer dort erkennbaren linearen Störung - also Korrelation zwischen 1. und 2. Bit - entstehe eine Gleichspannungskomponente, die über einen Tiefpaß TP, einen Absolutwertbildner IXI und einen Komparator K den Schalter S nach unten legt und damit diese Verknüpfung wirksam werden läßt. Mit kleiner werdender linearer Störung und verschwindender Korrelation zwischen 1. und 2. Bit geht der Schalter S nach oben und läßt die Verknüpfung von 1. und 4. Bit wirksam werden. Im Beispiel besteht der Komparator K aus einem Operationsverstärker, dessen zweiter Eingang einer Bezugssparung "Ref" zugeordnet ist und über dessen Ausgangssignal der Schalter S in geeigneter Weise betätigt wird.

Eine einfache, rein digitale Anordnung erhält man über die folgenden Schritte:

Tiefpaß TP und Absolutwertbildner IXI werden ersetzt durch die Minimallösung gemäß Fig. 2.

Zum Verständnis dieser Anordnung sei festgehalten, daß mit logischen Schaltungen in begrenztem Umfang die Häufigkeitsverteilung und damit der Gleichstrommittelwert binärer Signale manipuliert werden kann. In diesem Sinne ist ein EXOR-Gatter ein (linearer) Multiplizierer im Bereich $-1 \leqslant x \leqslant +1$, wobei x der Gleichstrommittelwert der beteiligten Signale sein soll. Voraussetzung dabei ist, daß die beiden Eingangssignale voneinander statistisch möglichst unabhängig sind. Die Schaltung gemäß Fig. 2 ist also ein Quadrierer, bei dem die beiden aus einer Quelle kommenden Signale durch gegenseitigen zeitlichen Versatz in diesem Sinne voneinander unabhängig gemacht worden sind. Man erhält also eine einseitig gerichtete Gleichspannungskomponente im Bereich $0 \leqslant 1$, die allerdings zur Ansteuerung eines Komparators wieder gesiebt werden müßte, beispielsweise wie dies in Fig. 1 durch den Tiefpaß TP erreicht wird.

Das Problem der Siebung kann aber umgangen werden, indem man auf die harte Umschaltung zu Gunsten eines fließenden Übergangs verzichtet. Fig. 3 zeigt hierfür im Beispiel eine komplette Anordnung. Bei vorhandener Korrelation zwischen 1. und 2. Bit liefert der Quadrierer eine mittlere Gleichsparung, die das nachfolgende Gatter für das von oben kommende, durch die Verknüpfung von 1. und 4. Bit entstandene Signal I durchlässig macht und über den invertierenden Eingang 6 der nachfolgenden (analogen) Summierschaltung 4 neutralisiert. Das im unteren Zweig geführte Signal II aus der Verknüpfung von 1. und 2. Bit wird überwiegend wirksam. Bei fehlender Korrelation zwischen 1. und 2. Bit, d.h. Gleichstrommittelwert Null im unteren Zweig, liefert auch der Quadrierer aus den Bausteinen T und E den Gleichstrommittelwert Null und sperrt das nachfolgende Gatter 5. Jetzt wird das Signal aus der Verknüpfung von 1. und 4. Bit voll wirksam.

Eine weitere Vereinfachung dieser Anordnung ist möglich, wenn man sich für eine weitere Verarbeitung mit zweiwertigen Signalen begnügt. Die Anordnung innerhalb der strichlierten Linie reduziert sich dann zu einer logischen Schaltung mit drei Eingängen A, B, C und einem Ausgang D und der folgenden Wahrheitstabelle:

| A | B | C | D |
|---|---|---|---|
| 0 | 0 | 0 | 0 |
| 0 | 0 | 1 | 0 |
| 0 | 1 | 0 | 0 |
| 0 | 1 | 1 | 1 |
| 1 | 0 | 0 | 0 |
| 1 | 0 | 1 | 1 |
| 1 | 1 | 0 | 1 |
| 1 | 1 | 1 | 1 |

Bei vorhandener (momentaner) Korrelation zwischen 1. und 2. Bit haben B und C denselben Zustand. Dieser Zustand wird an den Ausgang weitergegeben. Bei gegensinnigen B und C wird der Zustand von A weitergereicht.

Für die vorstehend beschriebenen Schaltungen läßt sich also folgendes sagen.

Ein adaptiver Entzerrer, der ein Mehrstufensignal verarbeiten soll, benötigt, um sicher zu konvergieren, zu Beginn des Adaptionsvorganges normalerweise einen größeren Störabstand als ein Entzerrer für binäre Signale. Durch eine vorübergehende Umschaltung auf Binärbetrieb kann man auch dort mit vergleichsweise niedrigem Störabstand auskommen.

Bei Systemen ohne Rückkanal ist eine solche Umschaltung allerdings nur auf der Empfangsseite durchführbar. Trotz der tatsächlichen Mehrstufigkeit des Signals gibt es bei dieser pseudoternären Betriebsart eine größere Ausbeute an richtigen Entscheidungen, was dazu führt, daß der Entzerrer leichter konvergiert. Das Kriterium für die Umschaltung zwischen dieser und der normalen Betriebsart wird der Signalstation am Entzerrerausgang entnommen.

Die bevorzugte Ausführungsform der entsprechenden Schaltung besteht im wesentlichen aus einer einfachen logischen Anordnung.

**Patentansprüche**

1. Adaptiver Entzerrer zur Entzerrung mehrstufiger Signale unter Verwendung von Korrelatoren und von über Regelgrößen einstellbaren Einstellgliedern, bei dem die Korrelatoren zwischen zwei Regelkriterien (I, II) über Schalter (S) umschaltbar sind, dadurch gekennzeichnet, daß der Schalter (S) eine Schaltung enthält, die nach Art eines Quadrierers aus einem Exklusiv-ODER-Gatter (E) besteht, dessen Eingänge über ein Laufzeitglied (T) zusammengeschaltet sind.

2. Adaptiver Entzerrer nach Anspruch 1, dadurch gekennzeichnet, daß der Korrelator eine Summierschaltung (4) enthält, derem Ausgang (D) ein Integrierglied (3) nachgeschaltet ist und deren nichtinvertierenden Eingängen (7, 8) die Regelkriterien (I, II) unmittelbar zugeführt werden, während ihr invertierender Eingang (6) mit dem Ausgang eines Exklusiv-ODER-Gatters (r) mit der das erste Regelkriterium (I) führenden Leitung verbunden ist, während sein zweiter Eingang mit dem Ausgang des Quadrierers (T, E) verbunden ist, dessen Eingänge wiederum an der das zweite Regelkriterium (II) führenden Leitung liegen.

**Claims**

1. An adaptive equaliser for the equalisation of multi-stage signals, using correlators and setting elements which can be set via control variables, where the correlators can be switched over between two control criteria (I, II) via switches (S), <u>characterised in</u> that the switch (S) includes a circuit which, in the manner of a squaring component, comprises an EXCLUSIVE-OR-gate (E) whose inputs are interconnected via a delay element (T).

2. An adaptive equaliser as claimed in claim 1, <u>characterised in</u> that the correlator includes an adder circuit (4) whose output (D) is followed by an integrating component (3) and whose noninverting inputs (7, 8) are directly supplied with the control criteria (I, II), whilst its inverting input (6) is connected with the output of an EXCLUSIVE-OR-gate (r) to the line which conducts the first control criterion (I), whilst its second input is connected to the output of the squaring component (T, E) whose inputs are likewise connected to the line which conducts the second control criterion (II).

**Revendications**

1. Correcteur adaptatif de distorsions servant à corriger les distorsions de signaux à plusieurs niveaux, moyennant l'utilisation de corrélateurs et de circuits de réglage, qui peuvent être réglés par l'intermédiaire de grandeurs de réglage, les corrélateurs pouvant être commutés par l'intermédiaire d'un commutateur (S) entre deux critéres de réglage (I, II), caractérisé par le fait que le commutateur (S) contient un circuit qui est réalisé à la manière d'un élément de transfert régi par une loi quadratique et constitué par une porte OU-Exclusif (E), dont les entrées sont interconnectées par l'intermédiaire d'un circuit de retard (T).

2. Correcteur adaptatif de distorsions suivant la revendication 1, caractérisé par le fait que le corrélateur contient un circuit de sommation (4), en aval de la sortie (D) duquel se trouve branché un circuit intégrateur (3) et aux entrées non inverseuses (7, 8) duquel les critéres de réglage (I, II) sont envoyés directement, tandis que son entrée inverseuse (6) est reliée à la sortie d'une porte OU-Exclusif (t) par la ligne transmettant le premier critère de réglage (I), tandis que sa seconde entrée est reliée à la sortie de l'élément de transfert régi par une loi quadratique (T, E), dont les entrées sont à nouveau raccordées à la ligne transmettant le second critère de réglage (II).

# FIG 1

1.Bit
4.Bit

1.Bit
2.Bit

TP   IXI   K   Ref   S   ∫dt   3

I
II

# FIG 2

T   E

# FIG 3

1.Bit
4.Bit

1.Bit
2.Bit

I
II

A   T   B   E   5   6   Σ   D   7   8   4   ∫dt   3

C